# EUROPÄISCHE PATENTSCHRIFT

(11) **EP 0 718 385 B1**
(45) Veröffentlichungstag und Bekanntmachung des Hinweises auf die Patenterteilung: **13.10.1999**
(21) Anmeldenummer: 95119849.8
(22) Anmeldetag: 15.12.1995
(51) Int. Cl.: C09D 17/00, C09D 5/02, C09D 5/44, C08G 18/70

(54) **Wässrige Pigmentpasten**
Aqueous pigment pastes
Pâtes pigmentaires aqueuses

(30) Priorität: 23.12.1994 DE 4446440
(43) Veröffentlichungstag der Anmeldung: 26.06.1996
(73) Patentinhaber: HOECHST AKTIENGESELLSCHAFT, 65926 Frankfurt am Main (DE)
(72) Erfinder: Wehner, Susanne, D-65606 Villmar (DE); Walz, Gerd, Dr., D-65207 Wiesbaden (DE); Schafheutle, Markus, Dr., D-65239 Hochheim (DE); Völker, Achim, Dr., D-63069 Offenbach (DE); Klein, Klausjörg, D-42289 Wuppertal (DE)
(74) Vertreter: Zounek, Nikolai, Dipl.-Ing.

(56) Entgegenhaltungen:
- EP-A- 0 524 511
- DE-A- 3 628 123

## Beschreibung

Wäßrige Beschichtungsmittel werden zunehmend für alle Aufgaben in der Veredelung von Oberflächen eingesetzt, da der Gehalt an organischen Lösungsmitteln zur Verringerung und Vermeidung von Immissionen immer weiter reduziert werden muß.

Wenn lösungsmittelhaltige Beschichtungssysteme durch lösungsmittelfreie oder lösungsmittelarme Systeme ersetzt werden, müssen die vorteilhaften Anwendungseigenschaften der bisherigen lösungsmittelhaltigen Systeme und deren gute Schutzwirkung erhalten bleiben oder womöglich übertroffen werden.

Die heute üblicherweise verwendeten Pastenharze enthalten nicht unerhebliche Mengen an Lösungsmitteln. Über deren Anteil im fertigen Beschichtungsmittel tragen sie damit zu dessen Lösungsmittelgehalt bei. Bekannterweise wird aber mit steigendem Lösungsmittelgehalt beispielsweise in kathodischen Tauchlack-Bädern der Umgriff (Hohlraumbeschichtung) verschlechtert, es treten Überbeschichtungen auf und Lösungsmittel gelangen vermehrt in das Abwasser und/oder die Abluft. Daher müssen die Lösungsmittel den Bindemitteln vor und/oder nach dem Dispergieren in Wasser z.B. durch Destillation oder Ultrafiltration entzogen werden. Dabei verbleibt verfahrensbedingt ein Teil der Lösungsmittel in den Dispersionen und es fallen, besonders beim sogenannten "Strippen" aus wäßriger Phase und beim Ultrafiltrieren größere Mengen eines Lösungsmittel-Wasser-Gemisches an, das entsorgt oder aufgearbeitet werden muß.

Es bestand daher die Aufgabe, Pigmentpasten für wäßrige Beschichtungsmittel zu entwickeln, die als lösungsmittelfreie Dispersion vorliegen und deren Eigenschaften denen der üblichen lösungsmittelhaltigen Systeme zumindest ebenbürtig sind.

Gegenstand der Erfindung sind wäßrige Pigmentpasten enthaltend
(A') eine wäßrige Dispersion eines Harzes (A) mit gegenüber Isocyanat reaktiven funktionellen Gruppen, und
(B') eine wäßrige lösungsmittelfreie Dispersion eines solubilisierten verkappten Isocyanats (B), mit der Maßgabe, daß im Fall einer kationischen Solubilisierung des Isocyanats zu dessen Herstellung eines polymeres oder oligomeres Polyisocyanat eingesetzt wird.

Die erfindungsgemäßen Pigmentpasten können durch Mischen der Dispersionen (A') und (B') unmittelbar oder kurze Zeit vor dem Gebrauch hergestellt werden. Eine andere Möglichkeit ist das Mischen von Harz (A) und Härter (B) in Lösung oder Schmelze, und anschließendes gemeinsames Dispergieren der Mischung in Wasser.

Zur Herstellung von Dispersionen dieser Harze und dieser Härtungsmittel müssen sie in hydrophile Formen überführt werden. Dies erfolgt beispielsweise durch Einkondensieren von Bausteinen, die hydrophile Gruppen enthalten. Diese hydrophilen Gruppen können kationisch, anionisch oder nichtionisch sein. Beispiele für kationische Gruppen sind Ammonium-, Phosphonium- oder Sulfonium-Gruppen. Tertiäre Amino- und Phosphin-Gruppen oder Sulfid-Gruppen sind selbst nicht kationisch, können aber durch Protonieren mit Säuren vor oder während dem Dispergierungsschritt in kationische Form überführt werden und daher auch hydrophil wirken. Beispiele für anionische Gruppen sind Carboxylat-, Phosphonat-, Phosphinat-, Sulfonat- oder Sulfinatgruppen. Sie können auch aus den entsprechenden (undissoziierten) Säuregruppen durch Basenzusatz vor oder während dem Dispergierungsschritt erzeugt werden. Beispiele für nichtionische hydrophile Gruppen sind Polyoxyalkylengruppen mit niedriger Anzahl von C-Atomen im Alkylenrest wie Polyoxyäthylen oder -propylen, oder polare Gruppen wie Amidgruppen, Aminogruppen, Harnstoffgruppen und Hydroxygruppen, bevorzugt in größerer Zahl in räumlicher Nähe.

Die Harze (A) können ausgewählt sein aus der Gruppe der hydroxyfunktionellen Polymere, wie z.B. Polyester, Polycarbonate, Polyepoxide, hydroxyfunktionelle Polyacrylate, Novolake und Alkydharze, aus den aminogruppenhaltigen Polymeren wie z.B. Polyamiden und Polyamidoaminen, und aus der Gruppe der mercaptofunktionellen Polymere. Gleichfalls geeignet sind Polymere, die mehrere Arten dieser funktionellen Gruppen in Mischung tragen. Besonders bevorzugt sind die amin-modifizierten Epoxidharze.

Geeignete amin-modifizierte Epoxidharze sind wasserverdünnbare Amino-Epoxidharze und solche Carbonataminaddukte, die in DE 36 44 370 und EP 272 665 beschrieben sind. Solche Amino-Epoxidharze weisen im allgemeinen eine Aminzahl von 30 bis 200 (mg KOH pro g Festharz), eine Hydroxylzahl von 50 bis 500 (mg KOH pro g Festharz) und eine zahlenmittlere Molmasse (Mn) von 250 bis 10000, bevorzugt 300 bis 5000 g/mol auf. Die untere Grenze der Aminzahl sollte bevorzugt 45, besonders bevorzugt 70, die obere Grenze dagegen sollte bevorzugt bei 150, besonders bevorzugt bei 100 liegen. Ist die Aminzahl zu niedrig, so ist die Löslichkeit zu gering oder es entstehen durch einen zu hohen Neutralisationsgrad zu saure pH-Werte in den Abscheidungsbädern. Ist die Aminzahl zu hoch, so bildet sich bei der Abscheidung ein schlecht haftender Film oder eine blasige Oberfläche.

Beispiele für Amino-Epoxidharze sind Umsetzungsprodukte von epoxidgruppenhaltigen Harzen mit vorzugsweise endständigen Epoxidgruppen aus den Gruppen Polyglycidyläther, Polyglycidylester und Polyglycidylamine mit gesättigten und/oder ungesättigten sekundären und/oder primären Aminen bzw. Aminoalkoholen. Diese können durch mindestens eine primäre und/oder sekundäre Hydroxylgruppe, durch die Dialkylaminogruppe und/oder durch eine primäre Aminogruppe, die durch Ketiminbildung vorübergehend geschützt wird, modifiziert sein.

Hydroxylgruppenhaltige Amino-Epoxidharze werden zweckmäßig aus Polyglycidyläthern mit bevorzugt zwei 1,2-Epoxidgruppen pro Molekül erhalten. Unter Polyglycidyläther im Rahmen dieser Erfindung werden vorzugsweise solche Polyglycidyläther der allgemeinen Formel 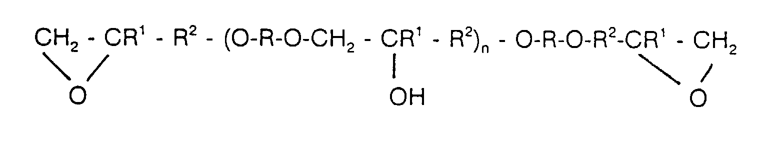 mit
- R =: 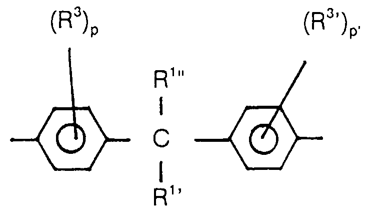
mit
- R¹,R^{1'},R^{1''} =: jeweils unabhängig voneinander -H ;-CₘH₂ₘ₊₁
- R² , R^{2'} =: jeweils unabhängig voneinander -(CR¹)ₘ-, bevorzugt -CH₂-
- R³, R³' =: jeweils unabhängig voneinander -H ,-CₘH₂ₘ₊₁, Halogen, bevorzugt -H
- n =: 0 bis 8, bevorzugt 1 bis 6
- m =: 1 bis 8, bevorzugt 1
- p, p' =: jeweils unabhängig voneinander 0 bis 4
verstanden.

Diese Polyglycidyläther haben eine zahlenmittlere Molmasse (Mn) von etwa 300 bis 5000 g/mol und eine Molmasse dividiert durch die Anzahl der Epoxygruppen ("Epoxid-Äquivalentgewicht") von etwa 170 bis 2500 g/mol. Beispiele hierfür sind Umsetzungsprodukte von Epichlorhydrin oder Methylepichlorhydrin mit Dihydroxydiphenylmethan (Bisphenol F) oder Dihydroxydiphenylpropan (Bisphenol A). Ebenfalls geeignet sind Umsetzungsprodukte von Epichlorhydrin oder Methylepichlorhydrin mit anderen ein- und mehrkernigen Dihydroxyaromaten, wie beispielsweise mit Dihydroxybenzophenon, Dihydroxynaphthalin und Resorcin. Polyepoxide mit geeigneter Molmasse werden entweder durch Auswahl der Mol-Verhältnisse von Bisphenol und Epichlorhydrin oder durch Reaktion der monomeren Diglycidylverbindungen mit weiterem Bisphenol unter Zusatz von Katalysatoren wie Lewis-Säuren oder Phosphoniumsalzen hergestellt.

Die Epoxidharze können vollständig oder teilweise hydriert sein; es können auch Gemische von Epoxidharzen mit unterschiedlicher Struktur und Molmasse eingesetzt werden. Weiterhin kann zum Elastifizieren ein Teil des beschriebenen Polyglycidyläthers durch aliphatische Polyglycidyläther der Formel 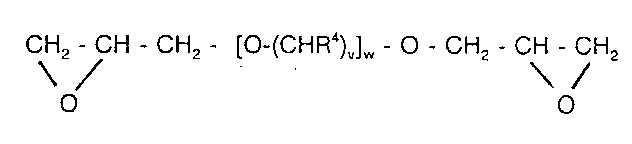 ersetzt werden, wobei
- R⁴: H oder ein niedriger, gegebenenfalls mit verschiedenen Substituenten versehener Alkylrest ist und
- v: Zahlen von 2 bis 6 und
- w: Zahlen von 5 bis 50 bedeuten.

Beispiele sind Glycidyläther von Bisphenol A- und Bisphenol F- Polypropylenglykol- und Polyäthylenglykoläthern (mit verschiedener Molmasse). Die modifizierten Epoxidharze können auch durch Reaktion mit langkettigen Polyalkoholen wie Hexandiol-1,6, Neopentylglykol, bisäthoxyliertes Neopentylglykol, Hydroxypivalinsäure-neopentylglykolester und Bis(hydroxymethyl)-cyclohexan, Monoanhydro-pentaerythrit sowie Polytetrahydrofurandiol, Polycaprolactondiol, Polycaprolactamdiol oder Polybutadiendiol in Gegenwart von geeigneten basischen oder sauren Katalysatoren wie Borfluorid-Amin-Komplexen modifiziert werden. Während Polyalkohole mit primären OH-Gruppen sich bei geeigneter Katalyse direkt mit Polyglycidyläthern umsetzen lassen, werden sekundäre OH-Gruppen zunächst mit Diisocyanat umgesetzt. Das erhaltene NCO-terminierte Reaktionsprodukt kann dann ohne Schwierigkeiten als Brücke zwischen 2 Mol Polyglycidyläther unter Vergrößerung der Molmasse eingebaut werden.

Eine ausführliche Aufzählung der geeigneten Epoxidverbindungen findet sich in den Handbüchern "Epoxidverbindungen und Harze" von A.M. Paquin, Springer Verlag Berlin 1958, Kapitel iv und "Handbook of Epoxy Resins" von H.Lee, K. Neville, McGraw-Hill Book Company, New York 1982 Reissue, sowie "Epoxy Resin Chemistry and Technology" von C.A. May, Marcel Dekker Inc., New York and Basel 1988.

Das Epoxidharz kann auch mit gesättigten oder ungesättigten Polycarbonsäuren und/oder Hydroxyalkylcarbonsäuren modifiziert sein. Aliphatische, cycloaliphatische und/oder aromatische Polycarbonsäuren verschiedener Kettenlänge sind beispielsweise Adipinsäure, Sebacinsäure, Fumarsäure, Isophthalsäure und dimere Fettsäure. Als Hydroxyalkylcarbonsäuren werden Milchsäure, Dimethylolpropionsäure oder auch carboxyl- und hydroxylgruppenhaltige Polyester verstanden. Bei der Umsetzung von überschüssigem Polyglycidyläther mit niedriger Molmasse mit Polycarbonsäuren und/oder Polyalkoholen werden als Zwischenstufe modifizierte Polyglycidyläther erhalten, die dann weiter mit Aminen und/oder Aminoalkoholen reagieren.

Es können auch heterocyclische Polyepoxidverbindungen verwendet werden, wie 1,3-Diglycidyl-5.5-dimethylhydantoin, Triglycidylisocyanurat oder Diepoxide aus Bisimiden. Eine andere geeignete Klasse von Polyepoxiden sind Polyglycidyläther von phenolischen Novolakharzen, wodurch die Funktionalität von 2 bis auf etwa 6 Glycidylgruppen pro Molekül gesteigert werden kann. Durch Defunktionalisieren mit langkettigen Alkylphenolen wie Dodecylphenol können zusätzlich elastifizierende Elemente eingebaut werden. Auch können Polyglycidylester von Polycarbonsäuren wie Hexahydrophthalsäurediglycidylester, Tetrahydrophthalsäurediglycidylester oder Fumarsäurediglycidylester verwendet werden.

Das Einführen der Aminogruppen erfolgt entweder durch Addition von NH-reaktiven Verbindungen an die Epoxidgruppe oder durch Umsetzen der Hydroxylgruppen des Grundharzes mit basischen Monoisocyanaten, die durch Reaktion von aromatischen und/oder aliphatischen und/oder cycloaliphatischen Di- oder Polyisocyanaten mit Dialkylaminoalkanol (vgl. DE-A-27 07 405) entstehen.

Als NH-reaktive Verbindungen werden verwendet primäre aliphatische Amine wie Methylamin, Äthylamin, Propylamin, Butylamin, Octylamin, Monoäthanolamin, 2-Äthylhexylamin, Dimethylaminopropylamin, Diäthylaminoäthylamin, Dimethylaminoneopentylamin oder Methoxypropylamin und/oder bevorzugt sekundäre aliphatische Amine wie Dialkylamine, Monoalkylhydroxyalkylamine oder Dihydroxyalkylamine. Beispiele für solche Verbindungen sind Dimethylamin, Diäthylamin, Dipropylamin, Dibutylamin, Methylbutylamin, Dimethylaminopropylamin, N-Methylaminoäthanol oder Diäthanolamin oder auch cyclische Amine, wie Morpholin oder Oxazolidin. Beim Einsatz der primären Amine reagiert das Amin mit der Epoxidgruppe in Abhängigkeit von den angebotenen stöchiometrischen Verhältnissen mit 1 bis 2 Epoxidgruppen unter Molekülvergrößerung.

Weiterhin können primäre Amine der allgemeinen Formel

H₂N-CR⁵R⁶-R⁷-O(CHR⁸-CHR⁹O)_{q}R¹⁰

oder sekundäre Amine der allgemeinen Formel

H-NR⁷-CR⁵R⁶-R⁷-O(CHR⁸-CH-R⁹O)_{q}n-R⁷-CR⁵R⁶-R⁷N-H

eingesetzt werden.

In dieser Formel stehen R⁵ und R⁶ für Wasserstoff, Alkyl- oder -CH₂-OH Gruppen, R⁷ steht für einen linearen oder verzweigten Alkylenrest, insbesondere für einen Alkylenrest mit 1 bis 3 Kohlenstoffatomen, R⁸ und R⁹ stehen für Wasserstoff oder Alkylreste mit 1 bis 4 Kohlenstoffatomen, R¹⁰ steht für Wasserstoff, einen Alkyl-, Cycloalkyl- oder Phenylrest, vorzugsweise für einen Alkylrest mit 1 bis 6 Kohlenstoffatomen und q ist eine ganze Zahl von 0 bis 5. Als Beispiele für solche Monoamine werden genannt: Äthanolamin, Propanolamin, Butanolamin, Äthylenglykol(2-amino-äthyl)äther (H₂N-CH₂-CH₂-O-CH₂-CH₂-OH) und Diäthylenglykolmono(3-aminopropyl)äther (H₂N-(CH₂)₃-O-CH₂-CH₂-O-CH₂-CH₂-OH). Beim Einsatz der primären Amine reagiert das Amin mit der Epoxidgruppe in Abhängigkeit von den angebotenen stöchiometrischen Verhältnissen unter Molekülvergrößerung. Als Beispiel für Diamine werden genannt: Jeffamine® M-Serie, Jeffamine® D-Serie und Jeffamine® ED-Serie.

Weiterhin kommen Di- oder Triamine mit primären und/oder sekundären Amino-gruppen in Frage, wie z.B. Laurylpropylendiamin, Talgfettpropylendiamin.

Mit sekundären Diaminen tritt eine Kettenverlängerung ein. Als sekundäre Diamine, bevorzugt langkettige Diamine, werden N,N'-Dialkyldiaminoalkane wie z.B. N,N'-Bis-(isohexyl)-1,6-diaminohexan, N,N'-Bis-(isohexyl)isophorondiamin, N,N-Bis(isohexyl)-dimethylhexamethylendiamin, N,N'-Bis(isohexyl)-2-methylpentamethylendiamin, N,N'-Bis(isohexyl)-äthylendiaminund N,N'-Bis(isohexyl)di-(4-aminocyclohexyl)methan oder Umsetzungsprodukte von gesättigten Glycidyläthern oder -estern oder Epoxyalkanen mit primären Diaminoalkanen verwendet wie das Additionsprodukt von Hexandiamin-1.6 oder 2-Methylpentamethylendiamin mit 2 Mol Glycidylester der ®Versaticsäure (in α-Stellung zur Carboxylgruppe verzweigte Monocarbonsäuren, besonders mit 9 bis 11 Kohlenstoffatomen).

Als Monoepoxide können für diesen Zweck auch gesättigte oder ungesättigte Glycidyläther oder α-Epoxide verschiedener Kettenlänge wie Dodecan-1,2-oxid oder Butylenoxid eingesetzt werden. Die geeignete Zahl an Hydroxylgruppen entsteht dabei einmal ohne weiteres Zutun aus der Epoxidgruppe bei der Addition der sekundären Aminogruppen, zum anderen kann sie durch Einsatz von Hydroxyalkylaminen gesteuert werden. Weiterhin können als sekundäre Diamine das Umsetzungsprodukt von 2 Mol 2-Athylhexylamin mit 1 Mol Beckopox® EP 075 (Diglycidyläther auf Basis von Propylenoxid) und/oder 1 Mol Beckopox® EP 140 sowie aliphatische sekundäre Diamine auf Basis von Propylenoxid-Addukten von Diolen oder Triolen, wie z.B. Novamin®-Typen zum Einsatz kommen.

Die Molverhältnisse zwischen Epoxid- und Amino-Gruppenhaltigen Verbindungen sind so zu wählen, daß der vollständige Einbau des Amins gewährleistet ist, weil sonst durchbruchartige Oberflächenstörungen beim elektrophoretischen Beschichten auftreten können, d.h. ein geringfügiger Überschuß an Epoxidgruppen ist vorteilhaft.

Es können alle Amine gleichzeitig mit den Epoxidgruppen umgesetzt oder es kann stufenweise vorgegangen werden. Die Reaktion der Amine beginnt schon bei Raumtemperatur und ist im allgemeinen exotherm. Um eine vollständige Umsetzung zu erreichen, ist es in der Regel notwendig, die Temperatur zeitweise auf etwa 50 bis 120 °C zu erhöhen.

Bei der Herstellung des Amino-Epoxid-Harzes geht man vorteilhafterweise so vor, daß man zunächst das Epoxid-Harz in einem Lösungsmittel löst und dann mit den Aminen umsetzt.

Bei einer besonders bevorzugten Herstellungsvariante werden die gelösten Epoxidharze zu einer Mischung aus den entsprechenden Aminen, Bisphenol A und Lösungsmittel dosiert.

Für Vernetzungsreaktionen müssen in dem Amino-Epoxid-Harz stets Hydroxylgruppen vorhanden sein. Die im Molekül vorhandene Hydroxylzahl (gemessen als mg KOH pro Gramm Festharz) ist maßgebend für die Vernetzungsfähigkeit des Films. Sie sollte über 50, vorzugsweise über 100, besonders vorteilhaft über 150 liegen. Die obere Grenze der Hydroxylzahl liegt bei 500, vorteilhafter unter 300. Ist die Hydroxylzahl zu niedrig, so entstehen bei der Vernetzung Filme, die noch in organischen Lösungsmitteln wie Methyläthylketon löslich sind. Ist die Hydroxylzahl dagegen zu hoch, so wird der Film zu spröde und bleibt eventuell auch zu hydrophil. Im Molekül müssen mindestens zwei vernetzungsfähige, bevorzugt primäre Hydroxylgruppen vorliegen.

Die für den Vernetzungsprozeß wichtigen primären und/oder sekundären Hydroxylgruppen droxylgruppen können anteilsweise durch primäre und/oder sekundäre ersetzt werden. Das Einführen von primären Aminogruppen in den Harzgrundkörper erfolgt vorzugsweise durch Umsetzen von mindestens ein, bevorzugt mindestens zwei Epoxidgruppen pro Molekül enthaltenden Harzen mit einem amino- und/oder hydroxylgruppenhaltigen Ketimin und/oder Aldimin und/oder Polyamin. Die Ketimine werden nach bekannten Methoden durch Wasserabspaltung aus den entsprechenden Polyaminen der allgemeinen Struktur R-NR-R-NH₂ oder den entsprechenden Aminoalkoholen der allgemeinen Struktur HO-R-NH₂ und den geeigneten aliphatischen Ketonen wie Diäthylketon, Methylisobutylketon, Äthyl-n-propylketon oder auch Cyclopentanon, Cyclo-hexanon, Acetophenon usw. hergestellt. Bevorzugte Ketimine sind Umsetzungsprodukte aus Methylisobutylketon und Diäthylentriamin. Die Reaktionsbedingungen (Reaktionstemperatur, Auswahl des Lösungsmittels) müssen so geführt werden, daß keine die Ketiminbindung zersetzende Substanzen wie Wasser in dem Reaktionsprodukt vorhanden bleiben.

Das Ketimin schützt die primäre Aminogruppe (vgl. US-A-3,523,925), so daß das Amin über eine weitere funktionelle Gruppe, z.B. eine Hydroxylgruppe oder bevorzugt eine sekundäre Aminogruppe ohne Schwierigkeiten mit dem Epoxidgrundharz umgesetzt werden kann. Durch die Wahl der Molverhältnisse der eingesetzten Komponenten muß gewährleistet sein, daß kein unumgesetztes niedermolekulares Amin im Ansatz zurückbleibt, weil sonst durchbruchartige Oberflächenstörungen beim elektrophoretischen Beschichten auftreten können. Die Reaktion der sekundären Aminogruppen des Polyaminoketimins mit der Epoxidgruppe beginnt schon bei Raumtemperatur und ist im allgemeinen exotherm. Um eine vollständige Umsetzung zu erreichen, ist es in der Regel notwendig, die Temperatur zeitweise auf 50 bis 120 °C zu erhöhen.

Die Härtungsmittel (B) tragen Isocyanatgruppen, die mit den funktionellen Gruppen der Harze unter Verbindungsbildung reagieren. Damit diese Reaktion nicht vorzeitig erfolgt (z.B. während der Lagerung, wenn ein Einkomponentensystem verwendet wird), werden die reaktiven Gruppen des Härtungsmittels zuvor mit solchen Verbindungen umgesetzt, die bei den Einbrenntemperaturen des Beschichtungsmittels von über 110 °C bis unter 210 °C, vorzugsweise unter 190 °C, besonders unter 180 °C leicht wieder abgespalten werden (sog. Verkappungs- oder Blockierungsmittel), wobei die reaktiven Gruppen des Härtungsmittels zurückgebildet werden. Diese reagieren dann mit den funktionellen Gruppen des Harzes unter Bildung einer danach im Allgemeinen nicht mehr schmelzbaren und unlöslichen Beschichtung.

Geeignet für die Erfindung sind Härtungsmittel, die Isocyanatgruppen enthalten. Bevorzugt werden blockierte oder verkappte Isocyanate, die nach Abspalten des Verkappungsmittels mit den funktionellen Gruppen des Harzes unter Bildung von Urethanen, Harnstoffen oder Thiourethanen reagieren.

Die erfindungsgemäß solubilisierten Polyisocyanate (B) können ohne Zusatz von Emulgatoren stabile Dispersionen in Wasser bilden. Sie werden beispielsweise so hergestellt, daß man ein Polyisocyanat (B1) in Substanz oder Schmelze umsetzt mit einem mehrwertigen aliphatischen Alkohol (B2) und einem Verkappungsmittel (B4), wobei gegebenenfalls basische Katalysatoren wie tert. Amine oder geringe Mengen an Zinnsalzen wie Dibutylzinndilaurat zugegeben werden können. Die Mengen werden so gewählt, daß nicht alle Isocyanatgruppen umgesetzt werden. Die verbliebenen Isocyanatgruppen werden mit einer solubilisierenden Verbindung (B3) umgesetzt, die ausgewählt ist aus der Gruppe der Polyamine mit mindestens einer tertiären und mindestens einer primären oder sekundären Aminogruppe und aus der Gruppe der Amine mit mindestens einer tertiären Aminogruppe und mindestens einer Hydroxy- , primären und sekundären Amino- und/oder Mercapto-Gruppe (B31, kationische Solubilisierung), der Hydroxy-, Amino- oder Mercapto-Säuren (B32, anionische Solubilisierung) und der organischen Hydroxy-, Amino- oder Mercapto-Verbindungen (B33), die ein hydrophiles nichtionisches Strukturelement enthalten. Geeignete hydrophile Strukturelemente sind beispielsweise Polyoxyalkylenpolyäther, wobei Alkylen für 1,2-Äthylen-, für 1,2-Propylen- oder Gemische aus diesen Gruppen steht, mehrere Hydroxylgruppen an benachbarten C-Atomen, oder andere hydrophile Gruppen wie beispielsweise Harnstoffgruppen. Die hydrophilen Strukturelemente lassen sich auch mit anionischen oder kationischen Strukturelementen kombinieren. Im Fall der kationischen Solubilisierung werden die Mengen der Komponenten (B1), (B2), (B31) und (B4) so gewählt, daß sich für (B) eine Aminzahl von 5 bis 40, bevorzugt 10 bis 30, und besonders bevorzugt ungefähr 20 mg KOH pro Gramm Festharz ergibt.

Diese solubilisierten Polyisocyanate werden dann in wäßrige Dispersion überführt, wobei die solubilisierenden Gruppen vor oder während der Dispergierung durch Zusatz von Säuren (im Fall B31) oder Alkalien (im Fall B32) teilweise oder vollständig in die ionische Form überführt werden.

Für die Erfindung geeignete Polyisocyanate (B1) sind aliphatische, cycloaliphatische und/oder aromatische Polyisocyanate mit mindestens zwei Isocyanatgruppen pro Molekül. Als aromatische Diisocyanate eignen sich die Isomeren oder Isomerengemische von Phenylendiisocyanat, Toluylendiisocyanat, Xylylendiisocyanat, Biphenylendiisocyanat, Naphthylendiisocyanat und Diphenylmethandiisocyanat, Diphenyltetraisocyanat, bevorzugt Naphthyltetraisocyanat, Toluylenund Xylylendiisocyanat. Aufgrund ihrer guten Beständigkeit gegenüber ultraviolettem Licht ergeben (cyclo)aliphatische Diisocyanate Produkte mit geringer Vergilbungsneigung. Beispiele hierfür sind Isophorondiisocyanat, Cyclopentylendiisocyanat, sowie die Hydrierungsprodukte der aromatischen Diisocyanate wie Cyclohexylendiisocyanat, Methylcyclohexylendiisocyanat und Dicyclohexylmethan-diisocyanat sowie aliphatische Diisocyanate der allgemeinen Formel

O = C = N - (CR¹¹ ₂)ᵣ - N = C = O

worin r eine ganze Zahl von 2 bis 20, insbesondere 6 bis 8 ist und R¹¹ Wasserstoff oder einen niedrigen Alkylrest mit 1 bis 8 C-Atomen, vorzugsweise 1 oder 2 C-Atomen bedeutet. Beispiele hierfür sind Trimethylendiisocyanat, Tetramethylendiisocyanat, Pentamethylendiisocyanat, Hexamethylendiisocyanat, Propylendiisocyanat, Äthyläthylendiisocyanat, Dimethyläthylendiisocyanat, Methyltrimethylendiisocyanat und Trimethylhexandiisocyanat. Besonders bevorzugt werden Diphenylmethan- und Toluylendiisocyanat, und deren Isomerengemische sowie Isophorondiisocyanat, Dicyclohexylmethan-diisocyanat, Trimethylendiisocyanat, Tetramethylendiisocyanat und Hexamethylendiisocyanat. Vinylpolymerisate, die Isocyanatgruppen enthalten und durch Copolymerisation von z. B. Cyanatoäthyl(meth)acrylat oder Dimethyl-isopropylbenzylisocyanat mit Alkyl(meth)acrylaten und/oder (Alkyl)vinylbenzolen entstehen, können auch verwendet werden. Ebenso sind gemischte aliphatische/aromatische Isocyanat-Verbindungen geeignet.

Im Fall der kationisch solubilisierten Polyisocyanate wurde überraschenderweise gefunden, daß sich das erfindungsgemäße Verfahren ohne Gegenwart von Lösungsmitteln nur anwenden läßt, wenn oligomere oder polymere Isocyanate eingesetzt werden. Solche oligomeren oder polymeren Isocyanate sind beispielsweise die dimeren (Uretdione) und trimeren Isocyanate (Cyanurate), die Allophanate und Biurete, die sich aus der Reaktion bereits gebildeter Urethane mit nicht umgesetztem Isocyanat ergeben, und polymere Isocyanate auf Basis des Diphenylmethandiisocyanats. Setzt man in diesem Fall monomere Isocyanate ein, so lassen sich die Reaktionsprodukte nicht in feinteilige Dispersionen überführen. Man erhält vielmehr grobteilige Dispersionen, die rasch vergelen.

Zum Verkappen oder Blockieren der Isocyanate werden übliche Verkappungsmittel (B4) eingesetzt. Verbindungen, die die Isocyanate blockieren, enthalten nur eine freie Amin-, Amid-, Lactam-, Mercapto- oder Hydroxylgruppe. Hierfür haben sich beispielsweise bewährt aliphatische oder cycloaliphatische Alkohole wie Methanol, Äthanol, Propanol, Butanol, Pentanol, Hexanol, 2-Äthylhexanol, 2-Pyridinylcarbinol, Dialkylaminoalkohole wie Dimethylaminoäthanol, Oxime wie Methyläthylketoxime, Lactame wie α-Caprolactam oder Pyrrolidon-2, Imide wie Phthalimid oder N-Hydroxymaleinimid, Hydroxyalkylester, Malonsäure- oder Acetessigsäureester. Es werden aber auch β-Hydroxyglykole oder -glykoläther und Glykolamide empfohlen. Besonders bevorzugt sind Äthylenglykol-monobutyläther und Diäthylenglykol-monobutyläther sowie die Oxime niedriger aliphatischer Ketone, wie Aceton oder Butanon.

Die mehrwertigen aliphatischen Alkohole (B2) tragen mindestens zwei Hydroxylgruppen. Beispiele geeigneter Alkohole sind Äthylen- und Propylenglykol, Neopentylglykol, Polyäthylen- und -propylenglykole sowie deren Copolymere, Glycerin, Erythrit, Pentaerythrit, Dipentaerythrit sowie Trimethyloläthan und -propan.

Die kationisch solubilisierenden Verbindungen (B31) sind Verbindungen mit mindestens einer tertiären Aminogruppe und mindestens einer funktionellen Gruppe ausgewählt aus Hydroxy-, Mercapto- und primären und sekundären Amino-Gruppen. Besonders bevorzugt sind Polyamine, die mindestens eine tertiäre und mindestens eine primäre oder sekundäre Aminogruppe enthalten. Die primäre oder sekundäre Aminogruppe reagiert mit einer Isocyanatgruppe unter Bildung einer Harnstoffgruppe. Die tertiäre Aminogruppe kann in dieser Reaktion als Katalysator wirken. Durch Protonieren mit Säuren wird sie in eine quaternäre Ammoniumgruppe umgewandelt und ermöglicht dadurch die emulgatorfreie Dispergierung der Härterkomponente (B). Geeignete Polyamine sind beispielsweise 3-Dimethylamino-1-propylamin, N,N-Dimethyläthylendiamin, N,N,N'-Trimethyläthylendiamin, N,N'-Bis-(3-aminopropyl)-piperazin, 1-Amino-4-methylpiperazin, N-(2-Aminoäthyl)-piperazin und N-(2-Aminoäthyl)-piperidin. Auch solche Verbindungen sind geeignet, die eine oder mehrere Hydroxygruppen oder eine oder mehrere Mercaptogruppen jeweils gemeinsam mit einer oder mehreren tertiären Aminogruppen tragen. Beispiele sind Triäthanolamin und Captamin. Ebenso sind Verbindungen geeignet, die neben den tertiären Amino-gruppen zwei oder mehr unterschiedliche gegenüber Isocyanat reaktive Gruppen ausgewählt aus den Hydroxy-, Mercapto- und primären und sekundären Amino-Gruppen tragen. Beispiele sind 1-Amino-4-(2-hydroxyäthyl)-piperazin, 2-Mercapto-3,4,5,6-tetrahydropyrimidin und 3-Mercapto-1,2,4-triazol. Es lassen sich auch Verbindungen einsetzen, die mindestens eine quaternäre Ammoniumgruppe und mindestens eine gegenüber Isocyanat reaktive Gruppe tragen, beispielsweise Cholin-chlorid (N-2-Hydroxyäthyl-trimethylammoniumchlorid), wobei das Ansäuern vor, während oder nach dem Dispergierungsschritt entfällt.

Die anionisch solubilisierenden Verbindungen (B32) sind Verbindungen, die mindestens eine funktionelle Gruppe ausgewählt aus Hydroxy-, Mercapto- und primären und sekundären Amino-Gruppen, und mindestens eine Säuregruppe enthalten. Die Säuregruppe kann ausgewählt werden aus den Carboxylgruppen, den Phosphon- und Phosphinsäuregruppen und den Sulfon- und Sulfinsäuregruppen. Beispiele geeigneter Verbindungen sind Aminosäuren wie Glycin, Alanin, β-Alanin, Cystein, Cysteinsäure, Lysin, Taurin, Serin, Hydroxysäuren wie Glykolsäure, Glycerinsäure, Milchsäure, Isäthionsäure (Hydroxyäthansulfonsäure), Hydroxymethansulfinsäure, 1- und 2-Aminoäthanphosphonsäure. Auch in diesem Fall können die Verbindungen in der Form von Salzen eingesetzt werden, wobei dann der Alkalizusatz entfallen kann.

Die nichtionisch solubilisierenden Verbindungen (B33) enthalten mindestens eine funktionelle Gruppe ausgewählt aus Hydroxy-, Mercapto- und primären und sekundären Amino-Gruppen, und mindestens ein hydrophiles Strukturelement, bevorzugt ausgewählt aus der Gruppe der Polyoxyalkylenäther mit 2 oder 3 C-Atomen im Alkylenrest und deren Mischungen. Beispiele sind die Polyäthylenund Polypropylenglykole und deren Monoäther sowie die unter den Handelsnamen ®Jeffamine und ®Novamin bekannten Polyoxyalkylen-amine. Gleichfalls geeignet sind z.B. niedermolekulare Polyäthylenimine, die von BASF unter dem Namen ®Polymin angeboten werden.

Aus den Harzen (A) und den Härtungsmitteln (B) können geeignete Pigmentpasten hergestellt werden, indem die Komponenten (A) und (B) in Lösung oder bevorzugt in Substanz oder Schmelze bei Temperaturen unterhalb der Abspaltungstemperatur der Verkappungsmittel gemischt werden. Gegebenenfalls wird das Lösungsmittel dann z.B. durch Destillation oder durch Diffusion entfernt, die Mischung wird erforderlichenfalls durch Zusatz von Säure oder Base in eine hydrophile Form überführt und dann in Wasser dispergiert (Einkomponentensystem).

Im Sinne eines Zweikomponentensystems können das Harz (A) und das Härtungsmittel (B) auch in separate Dispersionen (A') und (B') überführt werden, indem jede der Komponenten für sich durch Zusatz von Säure oder Base hydrophil gestellt und dann in Wasser dispergiert wird. Die Dispersionen können dann unmittelbar oder kurze Zeit vor Gebrauch miteinander gemischt werden.

Die erfindungsgemäßen Pastenharze werden auf an sich bekannte Weise weiter zu Pigmentpasten verarbeitet. Bevorzugt werden die erfindungsgemäßen Pigmentpastenharze in wäßrigen Lacksystemen eingesetzt. Besonders bevorzugt wird die Weiterverarbeitung zu Pigmentpasten für Elektrotauchlacke. Die Herstellung von Pigmentpasten aus Pastenharz, Pigmenten und weiteren üblichen Zusätzen ist allgemein bekannt und braucht nicht näher erläutert zu werden, vergleiche dazu D.H. Parker, Principles of Surface Coating Technology, Interscience Publishers, New York (1965); R.L. Yates, Electropainting, Robert Draper Ltd., Teddington/England, (1966); H.F. Payne, Organic Coating Technology, Band 2, Wiley and Sons, New York (1961).

Die Erfindung wird durch die nachfolgenden Beispiele näher erläutert. Alle Gehalte und Teile sind Massengehalte und Massenanteile, sofern nicht anders angegeben.

### Beispiel 1 Pigmentpasten

### Beispiel 1.1

Es werden 2 mol Diäthylenglykolmonobutyläther, 5,66 mol Butylglykol und 1,13 mol Trimethylolpropan vorgelegt und bei 80 °C 5,89 mol Desmodur VL® über 4 Stunden zudosiert. Nach Erreichen eines NCO-Gehalts von 2,6 % wird 0,75 mol N,N-Dimethylaminopropylamin zugegeben. Dabei steigt die Guttemperatur auf ca. 110 °C an. Nach Abkühlen auf 95 °C werden 0,6 mol Ameisensäure als 50 %ige wäßrige Lösung zugegeben und eingerührt. Anschließend wird mit deionisiertem Wasser dispergiert und auf ein Feststoffgehalt von 55 % eingestellt.

64,7 Teile dieser Dispersion werden mit 3,0 Teilen Dibutylzinnoxid, 0,85 Teilen ®Surfynol 104 (Netzmittel, 2,4,7,9-Tetramethyl-5-decin-4,7-diol), 0,85 Teilen ®Aerosil, 0,23 Teilen Ruß und 24,4 Teilen Titandioxid in einem Dissolver vermischt. Diese Paste wird mit ca. 6 Teilen voll entsalztem Wasser auf eine geeignete Viskosität eingestellt. Der Festkörper-Massengehalt dieser Paste beträgt ungefähr 64 %. In einer Perlmühle wird die Paste auf die erforderliche Feinheit vermahlen.

### Beispiel 1.2

83,8 Teile der Dispersion aus Beispiel 1.1 werden mit 4,8 Teilen Dibutylzinnoxid, 0,85 Teilen ®Surfynol 104, 0,85 Teilen ®Aerosil, 0,1 Teilen Ruß und 9,6 Teilen Titandioxid in einem Dissolver vermischt. Der Festkörper-Massengehalt dieser Paste beträgt ungefähr 61,5 %. In einer Perlmühle wird die Paste auf die erforderliche Feinheit vermahlen.

### Beispiel 1.3

46,8 Teile der Dispersion aus Beispiel 1.1 werden mit 2,7 Teilen Dibutylzinnoxid, 0,6 Teilen ®Surfynol 104, 0,9 Teilen ®Aerosil, 0,3 Teilen Ruß und 30,4 Teilen Titandioxid in einem Dissolver vermischt. Diese Paste wird mit ca. 18 Teilen voll entsalztem Wasser auf eine geeignete Viskosität eingestellt. Der Festkörper-Massengehalt dieser Paste beträgt ungefähr 60 %. In einer Perlmühle wird die Paste auf die erforderliche Feinheit vermahlen.

### Beispiel 1.4 (Vergleich)

### 1.4.1 Epoxid-Amin-Addukt

Zu einer Lösung von 204 Teilen (2 mol) N,N-Dimethylaminopropylamin in 1224 Teilen Äthoxypropanol werden bei 60 bis 80 °C während einer Stunde 1708 Teile (4 mol) Denacol® EX-145 (Phenol-(EO5)-glycidyläther) zugefügt. Die Mischung wird anschließend bei 80 bis 100 °C gehalten, bis der Epoxidgehalt unter die Nachweisgrenze gesunken ist (Aminzahl bezogen auf den Feststoff ca. 117 mg/g). Zu dieser Lösung werden 72 Teile VE-Wasser und 400 Teile Milchsäure (90 %ig) unter Rühren gegeben, anschließend wird mit 128 Teilen Butylglykol auf einen Feststoffgehalt von 60 % verdünnt.

### 1.4.2 Urethan

Zu 348 Teilen Desmodur® T80 (Mischung von 80 % 2,4- und 20 % 2,6-Toluylendiisocyanat) in 296 Teilen Xylol werden bei 40 bis 60 °C 540 Teile Iso-Octadecylalkohol und 0,9 Teile Dibutylzinndilaurat während einer Stunde zugefügt. Die Mischung wird bei dieser Temperatur gehalten, bis der Massengehalt an freiem Isocyanat auf ca. 9,5 % gesunken ist (Feststoffgehalt ca. 75 %).

### 1.4.3

1280 Teile (2 Mol Epoxid) von Beckopox® SEP 311 (75 %ig in Xylol) werden auf 80 °C erwärmt. Zu dieser Lösung werden während einer Stunde 1184 Teile des Urethans (1.4.2, 75 %ig) zugefügt. Die Mischung wird bei 80 °C gehalten, bis kein freies Isocyanat mehr nachweisbar ist. Anschließend wird das Lösungsmittel unter vermindertem Druck abdestilliert, der Rückstand wird mit 1232 Teilen Äthoxypropanol auf ca. 60 % Feststoffgehalt verdünnt.

### 1.4.4 Bindemittel

In die Lösung aus 1.4.3 wird die in 1.4.1 erhaltene Lösung eingetragen, die Mischung wird bei 60 bis 80 °C gehalten, bis die Säurezahl und der Epoxidgehalt praktisch auf Null gesunken sind. Die Mischung wird auf einen Feststoffgehalt von 55 % mit Butylglykol verdünnt.

### 1.4.5 Anreibeharz (Beispiel 3 der EP-A 0 183 025)

In einem mit Rührer, Thermometer, Zugabetrichter, Rückflußkühler und Wasserabscheider versehenen Reaktionsgefäß werden 380 Teile eines Epoxidharzes auf Basis von Bisphenol A (Molmasse dividiert durch die mittlere Anzahl an Epoxidgruppen pro Molekül "Epoxidäquivalent" ca. 190 g/mol) mit 268 Teilen Talgfettamin und 104 Teilen N,N-Diäthylaminopropylamin bei 75 bis 80 °C umgesetzt, bis der Epoxidgehalt auf Null gesunken ist. Nach Abkühlen auf 80 °C werden 60 Teile Paraformaldehyd (91 %ig) zugegeben, mit Toluol als Schleppmittel werden 38 Teile Reaktionswasser azeotrop abdestilliert. Das Schleppmittel wird unter vermindertem Druck abdestilliert, der Rückstand wird in 90 Teilen 2-Methoxypropanol aufgenommen. Das Harz weist folgende Kenngrößen auf:

| | |
|---|---|
| Viskosität bei 25 °C: | 7000 mPa·s |
| Aminzahl | 188 mg/g |
| Massenanteil aliphatischer Strukturen | 33 % |
| Molmasse (berechnet) | 774 g/mol |
| Feststoffgehalt | 55 % |

### 1.4.6 Katalysatorpaste (Beispiel 5 der DE-A 39 40 781)

30 g 2-Äthoxypropanol, 3 g eines handelsüblichen Netzmittels, 2 g Eisessig und 40 g Dibutylzinnoxid werden in einem Dissolver gemischt und 2 Stunden bei 60 °C dispergiert. 60 g des Anreibeharzes aus Beispiel 1.4.5 und 64 g voll entsalztes (VE-)Wasser werden zugesetzt, die Mischung wird in einer Mühle auf die erforderliche Kornfeinheit vermahlen.

### 1.4.7 Pigmentpaste

10,6 Teile des Bindemittels aus Beispiel 1.4.4, 0,6 Teile Essigsäure (50%ig), 0,6 Teile 2,4,7,9-Tetramethyl-5-decin-4,7-diol (Surfynol 104®, Netzmittel) und 12,3 Teile der Katalysator-Paste aus Beispiel 1.4.6 werden miteinander vermischt. Dazu werden unter Rühren 4,0 Teile Bleisilikat, 0,4 Teile Ruß und 40,2 Teile Titandioxid gegeben. Man stellt mit 31,3 Teilen VE-Wasser auf eine geeignete Viskosität ein und vermahlt die Pigmentpaste auf einer entsprechenden Mühle auf eine ausreichende Korngröße.

### Beispiel 2 Amino-Epoxidharz

In einem Reaktionsgefäß, das mit Rührer, Thermometer, Tropftrichter und Rückflußkühler ausgerüstet ist, werden zu einer Lösung aus 428,62 g Polyglycidyläther auf Basis Bisphenol A mit einem Epoxidäquivalentgewicht von 472 g/mol in 142,27 g Methoxypropanol und 31,78 g Diäthanolamin bei 40 °C zudosiert. Anschließend werden 15,44 g Dimethylaminopropylamin und 93,23 g eines Adduktes von 116 g 1,6-Diaminohexan mit 500 g Cardura® E 10 (Glycidylester einer in α-Stellung verzweigten Monocarbonsäure mit 9 bis 11 C-Atomen) bei 40 bis 50 °C zugesetzt und die Lösung langsam auf 90 bis 100 °C aufgeheizt. Zur Vervollständigung der Reaktion hält man die angegebene Temperatur noch 3 Stunden. Der Epoxidgehalt ist dann Null.

| | |
|---|---|
| Aminzahl (bez. auf Festharz) | 98 mg/g |
| Festkörper-Massengehalt | 80 % |

### Beispiel 3 Bindemittel aus Harz und Härter

### 3.1 Vernetzer

Es werden bei 50 °C 10,2 mol Desmodur VL® vorgelegt und anschließend innerhalb 7 min 1 mol ®Voranol P 400 zugesetzt. Nach 0,5 Stunden bei 60 °C wird eine Mischung aus 11,1 mol Butylglykol und 1,9 mol Trimethylolpropan innerhalb von 0,5 Stunden zudosiert. 10 Minuten später wird 1,68 mol N,N-Dimethylaminopropylamin zugegeben und eingerührt. Die Mischung erwärmt sich dabei auf 110 °C. Es wird so lange weitergerührt, bis der NCO-Massengehalt auf Null gefallen ist. Nach Abkühlen auf 95 °C werden 1,38 mol Ameisensäure als 50 %ige wäßrige Lösung zugegeben und anschließend mit deionisiertem Wasser auf einen Feststoffgehalt von 50 % verdünnt.

### 3.2 Bindemittel

In einem Reaktionsgefäß, das mit Rührer, Thermometer, Tropftrichter und Rückflußkühler ausgerüstet ist, werden 766 g des auf 90 bis 100 °C erwärmte Amino-Epoxidharz gemäß Beispiel 2 mit 268 g des Vernetzers gemäß Beispiel 3.1 versetzt und diese Mischung mit 85 %iger Ameisensäure neutralisiert. Anschließend wird mit entmineralisiertem Wasser auf einen Feststoffgehalt von 35 % verdünnt.

### Beispiel 4 Lacke

### 4.1

357 Teile der Bindemitteldispersion gemäß Beispiel 3.2 werden mit ca. 400 Teilen voll entsalzten Wassers gemischt. Dann werden unter Rühren 117 Teile der Pigmentpaste gemäß 1.1 zugegeben. Anschließend wird mit einer weiteren Menge voll entsalzten Wassers auf einen Feststoffgehalt von ca. 20 % eingestellt. Das Pigment-Bindemittel-Verhältnis (PBV) ist ca. 0,2 : 1.

### 4.2

364 Teile der Bindemitteldispersion gemäß Beispiel 3.2 werden mit ca. 400 Teilen voll entsalzten Wassers gemischt. Dann werden unter Rühren 118 Teile der Pigmentpaste gemäß 1.2 zugegeben. Anschließend wird mit einer weiteren Menge voll entsalzten Wassers auf einen Feststoffgehalt von ca. 20 % eingestellt. Das Pigment-Bindemittel-Verhältnis (PBV) ist ca. 0,1 : 1.

### 4.3

286 Teile der Bindemitteldispersion gemäß Beispiel 3.2 werden mit ca. 400 Teilen voll entsalzten Wassers gemischt. Dann werden unter Rühren 167 Teile der Pigmentpaste gemäß 1.3 zugegeben. Anschließend wird mit einer weiteren Menge voll entsalzten Wassers auf einen Feststoffgehalt von ca. 20 % eingestellt. Das Pigment-Bindemittel-Verhältnis (PBV) ist ca. 0,4 : 1.

### 4.4

240 Teile der Bindemitteldispersion gemäß Beispiel 3.2 und 64,5 Teile der Polyurethandispersion gemäß Beispiel 1.1 werden mit ca. 180 Teilen voll entsalzten Wassers unter Rühren auf einen Feststoffgehalt von ca. 25 % verdünnt. Diese Klarlacklösung wird mit 109 Teilen Pigmentpaste gemäß Beispiel 1.4.7 und 1,2 Teilen Ameisensäure versetzt. Anschließend wird mit einer weiteren Menge voll entsalzten Wassers auf einen Feststoffgehalt von ca. 20 % eingestellt. Das Pigment-Bindemittel-Verhältnis (PBV) ist ca. 0,4 : 1.

### Beispiel 5 Abscheideergebnisse:

Mit den Lackzubereitungen aus Beispiel 4 werden phosphatierte Eisenblankbleche in einem offenen Glasgefäß kataphoretisch beschichtet. Als Anode wurde ein blankes Stahlblech im Abstand von 5 bis 10 cm von der Kathode verwendet. Bei 225 V Abscheidespannung wurde 2 Minuten unter Rühren bei einer Badtemperatur von 32 °C beschichtet, anschließend wurden die Bleche mit Wasser abgespült. Die Lackschicht wurde 30 Minuten bei 170 °C eingebrannt. Die Eigenschaften sind in der folgenden Tabelle zusammengefaßt:

| | Einheit | Lack 4.1 | Lack 4.2 | Lack 4.3 | Lack 4.4 |
|---|---|---|---|---|---|
| Oberflächenqualität | | i.O. | i.O. | i.O. | i.O. |
| L-Blech | | i.O. | i.O. | i.O. | i.O. |
| Abscheideäquivalent | C/g | 34 | 35 | 35 | 34 |
| Umgriff (Ford-Box) | | | | | |
| Schichtdicke außen | µm | 21 | 21 | 20 | 20 |
| 7 µm-Grenze | cm | 21 | 22 | 21 | 22 |
| Reichweite | cm | 24 (6 µm) | 24 (6 µm) | 24 (7 µm) | 24 (6 µm) |
| Acetonbeständigkeit | s | > 60 | > 60 | > 60 | > 60 |
| Schlagtiefung | lb·in | 80 | 100 | 100 | 80 |
| Erichsentiefung | mm | 8,4 | 8,2 | 8,4 | 8,4 |
| Cold impact | lb·in | 20 | 20 | 20 | 20 |

## Patentansprüche

1. Wäßrige Pigmentpasten enthaltend
(A') eine wäßrige Dispersion eines Harzes (A) mit gegenüber Isocyanat reaktiven funktionellen Gruppen, und
(B') eine wäßrige lösungsmittelfreie Dispersion eines solubilisierten verkappten Isocyanats (B), mit der Maßgabe, daß im Fall einer kationischen Solubilisierung des Isocyanats zu dessen Herstellung ein polymeres oder oligomeres Polyisocyanat eingesetzt wird.

2. Pigmentpasten nach Anspruch 1, dadurch gekennzeichnet, daß das Harz (A) funktionelle Gruppen ausgewählt aus Hydroxy-, Amino- und Mercapto-Gruppen jeweils ausschließlich oder in Mischung untereinander enthält.

3. Pigmentpasten nach Anspruch 2, dadurch gekennzeichnet, daß das Harz (A) ein amino-modifiziertes Epoxidharz ist.

4. Pigmentpasten nach Anspruch 1, dadurch gekennzeichnet, daß das verkappte Isocyanat (B) solubilisiert ist und erhältlich ist durch Umsetzen von
(B1) einem polymeren oder oligomeren Polyisocyanat,
(B2) einem mehrwertigen Alkohol,
(B3) einer Verbindung mit mindestens einer hydrophilen Gruppe und mindestens einer funktionellen Gruppe ausgewählt aus Hydroxy-, Mercapto- und primären und sekundären Amino-Gruppen, und
(B4) einer Verbindung mit mindestens einem aktiven Wasserstoffatom, die bei Einbrenntemperaturen abgespalten wird.

5. Pigmentpasten nach Anspruch 1, dadurch gekennzeichnet, daß das verkappte Isocyanat (B) kationisch solubilisiert ist und erhältlich ist durch Umsetzen von
(B1) einem polymeren oder oligomeren Polyisocyanat,
(B2) einem mehrwertigen Alkohol,
(B31) einer Verbindung mit mindestens einer tertiären Aminogruppe und mindestens einer funktionellen Gruppe ausgewählt aus Hydroxy-, Mercapto- und primären und sekundären Amino-Gruppen, und
(B4) einer Verbindung mit mindestens einem aktiven Wasserstoffatom, die bei Einbrenntemperaturen abgespalten wird,
wobei die Mengen von (B1), (B2), (B31) und (B4) so gewählt werden daß eine Aminzahl des Produkts (B) von 5 bis 40 mg KOH / g Festharz erreicht wird.

6. Pigmentpasten nach Anspruch 1, dadurch gekennzeichnet, daß das verkappte Isocyanat (B) anionisch solubilisiert ist und erhältlich ist durch Umsetzen von
(B1) einem Polyisocyanat,
(B2) einem mehrwertigen Alkohol,
(B32) einer Verbindung, die mindestens eine funktionelle Gruppe ausgewählt aus Hydroxy-, Mercapto- und primären und sekundären Amino-Gruppen, und mindestens eine Säuregruppe enthält, und
(B4) einer Verbindung mit mindestens einem aktiven Wasserstoffatom, die bei Einbrenntemperaturen abgespalten wird.

7. Pigmentpasten nach Anspruch 1, dadurch gekennzeichnet, daß das verkappte Isocyanat (B) nichtionisch solubilisiert ist und erhältlich ist durch Umsetzen von
(B1) einem Polyisocyanat,
(B2) einem mehrwertigen Alkohol,
(B33) einer Verbindung, die mindestens eine funktionelle Gruppe ausgewählt aus Hydroxy-, Mercapto- und primären und sekundären Amino-Gruppen, und mindestens ein hydrophiles Strukturelement enthält, ausgewählt aus der Gruppe der Polyoxyalkylenäther mit 2 oder 3 C-Atomen im Alkylenrest und deren Mischungen, und
(B4) einer Verbindung mit mindestens einem aktiven Wasserstoffatom, die bei Einbrenntemperaturen abgespalten wird.

8. Pigmentpasten nach Anspruch 4, dadurch gekennzeichnet, daß zur Herstellung des verkappten Isocyanates (B) zunächst das Polyisocyanat (B1) mit einem molaren Unterschuß der Verbindungen (B2) und (B4) gleichzeitig oder nacheinander in Substanz oder in Schmelze umgesetzt wird, danach die Verbindung (B3) in einer solchen Menge zugegeben wird, daß keine freien Isocyanatgruppen mehr vorhanden sind.

9. Pigmentpasten nach Anspruch 8, dadurch gekennzeichnet, daß als Komponente (B3) eine Mischung von jeweils mindestens einer Verbindung gemäß (B33) und (B31) oder (B33) und (B32) eingesetzt wird.

10. Pigmentpasten nach Anspruch 5, dadurch gekennzeichnet, daß das verkappte Isocyanat (B) durch Zusatz einer organischen oder anorganischen Säure völlig oder teilweise protonisiert und dann in Wasser dispergiert wird.

11. Pigmentpasten nach Anspruch 6, dadurch gekennzeichnet, daß das verkappte Isocyanat (B) durch Zusatz einer organischen oder anorganischen Base völlig oder teilweise ionisiert und dann in Wasser dispergiert wird.

12. Pigmentpasten nach Anspruch 1, dadurch gekennzeichnet, daß zur Herstellung der Komponente (B) ein Polyisocyanat (B1) ausgewählt wird aus den polymeren und oligomeren aromatischen Polyisocyanaten.

13. Pigmentpasten nach Anspruch 4, dadurch gekennzeichnet, daß zur Herstellung der Komponente (B) ein polymeres oder oligomeres Isocyanat (B1) ausgewählt wird aus der Gruppe der polymeren und oligomeren Diisocyanate von Diphenylmethan, 2,2-Diphenylpropan und 1,1-Diphenyläthan sowie der dimeren und trimeren Isocyanate, Biurete, Allophanate und Cyanurate.

14. Pigmentpasten nach Anspruch 4, dadurch gekennzeichnet, daß der mehrwertige Alkohol (B2) ausgewählt ist aus der Gruppe der Polyoxyalkylendiole, der aliphatischen und cycloaliphatischen Alkohole mit 3 bis 8 Kohlenstoffatomen und mindestens zwei Hydroxygruppen sowie deren Umsetzungsprodukte mit Äthylenoxid und Propylenoxid und deren Mischungen.

15. Pigmentpasten nach Anspruch 5, dadurch gekennzeichnet, daß die Verbindung (B31) ein aliphatisches Polyamin ist mit einer tertiären und mindestens einer sekundären oder primären Aminogruppe und mit 2 bis 10 C-Atomen.

16. Pigmentpasten nach Anspruch 6, dadurch gekennzeichnet, daß die Verbindung (B32) ausgewählt ist aus der Gruppe der Carbonsäuren und der organischen Sulfon-, Sulfin- Phosphon- und Phosphinsäuren mit jeweils einer oder mehreren gegenüber Isocyanat reaktiven Gruppen ausgewählt aus den Hydroxy-, Amino- und Mercaptogruppen.

17. Pigmentpasten nach Anspruch 7, dadurch gekennzeichnet, daß die Verbindung (B33) ein Polyoxyalkylen-diol oder -amin ist.

18. Pigmentpasten nach Anspruch 4, dadurch gekennzeichnet, daß die Verbindung (B4) ein Verkappungsmittel ist ausgewählt aus der Gruppe der aliphatischen und cycloaliphatischen Alkohole, der Mono- und Oligoalkylenglykolmonoäther, der Lactame, der Imide und der Ketoxime.

19. Pigmentpasten nach Anspruch 1, herstellbar durch Mischen der Dispersionen von Harz (A') und Härter (B') unmittelbar vor Gebrauch.

20. Pigmentpasten nach Anspruch 1, herstellbar durch Mischen der Komponenten Harz (A) und Härter (B) in Lösung oder Schmelze, gegebenenfalls Entfernen des Lösungsmittels, Zugabe eines lonisierungsmittels und gemeinsames Dispergieren der Mischung beider Komponenten in Wasser.

21. Verwendung einer Pigmentpaste nach Anspruch 1 zur Herstellung von Beschichtungsmitteln für die Beschichtung von Gegenständen nach dem Verfahren der Einbrennlackierung.

22. Verwendung einer Pigmentpaste nach Anspruch 1 bei der Beschichtung von elektrisch leitenden Gegenständen nach dem Verfahren der elektrophoretischen Tauchlackierung.

## Claims

1. An aqueous pigment paste comprising
(A') an aqueous dispersion of a resin (A) having functional groups which are reactive with respect to isocyanate, and
(B') an aqueous solvent-free dispersion of a solubilized, capped isocyanate (B), with the proviso that, in the case of cationic solubilization of the isocyanate, a polymeric or oligomeric polyisocyanate is employed for its preparation.

2. The pigment paste as claimed in claim 1, wherein the resin (A) contains functional groups selected from hydroxyl, amino and mercapto groups, in each case alone or in a mixture with one another.

3. The pigment paste as claimed in claim 2, wherein the resin (A) is an amino-modified epoxy resin.

4. The pigment paste as claimed in claim 1, wherein the capped isocyanate (B) is solubilized and is obtainable by reacting
(B1) a polymeric or oligomeric polyisocyanate,
(B2) a polyhydric alcohol,
(B3) a compound having at least one hydrophilic group and at least one functional group selected from hydroxyl, mercapto and primary and secondary amino groups, and
(B4) a compound having at least one active hydrogen atom which is eliminated at baking temperatures.

5. The pigment paste as claimed in claim 1, wherein the capped isocyanate (B) is cationically solubilized and is obtainable by reacting
(B1) a polymeric or oligomeric polyisocyanate,
(B2) a polyhydric alcohol,
(B31) a compound having at least one tertiary amino group and at least one functional group selected from hydroxyl, mercapto and primary and secondary amino groups, and
(B4) a compound having at least one active hydrogen atom which is eliminated at baking temperatures,
the quantities of (B1), (B2), (B31) and (B4) being selected such that the product (B) has an amine number of from 5 to 40 mg of KOH/g of solid resin.

6. The pigment paste as claimed in claim 1, wherein the capped isocyanate (B) is anionically solubilized and is obtainable by reacting
(B1) a polyisocyanate,
(B2) a polyhydric alcohol,
(B32) a compound which contains at least one functional group selected from hydroxyl, mercapto and primary and secondary amino groups, and at least one acid group, and
(B4) a compound having at least one active hydrogen atom which is eliminated at baking temperatures.

7. The pigment paste as claimed in claim 1, wherein the capped isocyanate (B) is nonionically solubilized and is obtainable by reacting
(B1) a polyisocyanate,
(B2) a polyhydric alcohol,
(B33) a compound which contains at least one functional group selected from hydroxyl, mercapto and primary and secondary amino groups, and at least one hydrophilic structural element selected from the group consisting of polyoxyalkylene ethers having 2 or 3 carbon atoms in the alkylene radical, and mixtures thereof, and
(B4) a compound having at least one active hydrogen atom which is eliminated at baking temperatures.

8. The pigment paste as claimed in claim 4, wherein to prepare the capped isocyanate (B) the polyisocyanate (B1) is first reacted simultaneously or in succession, in bulk or in the melt, with a molar deficit of the compounds (B2) and (B4), and the compound (B3) is then added in a quantity such that free isocyanate groups are no longer present.

9. The pigment paste as claimed in claim 8, wherein as component (B3) a mixture of in each case at least one compound according to (B33) and (B31) or (B33) and (B32) is employed.

10. The pigment paste as claimed in claim 5, wherein the capped isocyanate (B) is completely or partially protonated by adding an organic or inorganic acid and then dispersed in water.

11. The pigment paste as claimed in claim 6, wherein the capped isocyanate (B) is completely or partially ionized by adding an organic or inorganic base and then dispersed in water.

12. The pigment paste as claimed in claim 1, wherein to prepare the component (B) a polyisocyanate (B1) is selected from the polymeric and oligomeric aromatic polyisocyanates.

13. The pigment paste as claimed in claim 4, wherein to prepare the component (B) a polymeric or oligomeric isocyanate (B1) is selected from the group consisting of polymeric and oligomeric diisocyanates of diphenylmethane, 2,2-diphenylpropane and 1,1-diphenylethane, and of dimeric and trimeric isocyanates, biurets, allophanates and cyanurates.

14. The pigment paste as claimed in claim 4, wherein the polyhydric alcohol (B2) is selected from the group consisting of polyoxyalkylene diols, aliphatic and cycloaliphatic alcohols having 3 to 8 carbon atoms and at least two hydroxyl groups, and reaction products thereof with ethylene oxide and propylene oxide, and mixtures thereof.

15. The pigment paste as claimed in claim 5, wherein the compound (B31) is an aliphatic polyamine having one tertiary and at least one secondary or primary amino group and having 2 to 10 carbon atoms.

16. The pigment paste as claimed in claim 6, wherein the compound (B32) is selected from the group consisting of carboxylic acids and of organic sulfonic, sulfinic, phosphonic and phosphinic acids having in each case one or more isocyanate-reactive groups selected from hydroxyl, amino and mercapto groups.

17. The pigment paste as claimed in claim 7, wherein the compound (B33) is a polyoxyalkylene diol or a polyoxyalkylene amine.

18. The pigment paste as claimed in claim 4, wherein the compound (B4) is a capping agent selected from the group consisting of aliphatic and cycloaliphatic alcohols, mono- and oligoalkylene glycol monoethers, lactams, imides and ketoximes.

19. The pigment paste as claimed in claim 1, which can be prepared by mixing the dispersions of resin (A') and curing agent (B') directly before use.

20. The pigment paste as claimed in claim 1, which can be prepared by mixing the components resin (A) and curing agent (B), in solution or in the melt, removing the solvent if desired, adding an ionizing agent and jointly dispersing the mixture of the two components in water.

21. The use of a pigment paste as claimed in claim 1 to produce coating compositions for the coating of articles by the baking method.

22. The use of a pigment paste as claimed in claim 1 in the coating of electrically conducting articles by the process of electrophoretic deposition coating.

## Revendications

1. Pigments en pâtes aqueux contenant
(A') une dispersion aqueuse d'une résine (A) comportant des groupes fonctionnels réactifs sur l'isocyanate, et
(B') une dispersion aqueuse sans solvant d'un isocyanate coiffé solubilisé (B) à la condition que, dans le cas d'une solubilisation cationique de l'isocyanate, l'on emploie pour la préparation de celui-ci un polyisocyanate polymère ou oligomère.

2. Pigments en pâtes selon la revendication 1, caractérisés en ce que la résine (A) contient des groupes fonctionnels pris parmi les groupes hydroxy, amino et mercapto à chaque fois exclusivement ou en mélange entre eux.

3. Pigments en pâtes selon la revendication 2, caractérisés en ce que la résine (A) est une résine époxyde modifiée par la fonction amino.

4. Pigments en pâtes selon la revendication 1, caractérisés en ce que l'isocyanate coiffé (B) est solubilisé et obtenu par transformation
(B1) d'un polyisocyanate polymère ou oligomère,
(B2) d'un alcool multifonctionnel,
(B3) d'un composé avec au moins un groupe hydrophile et au moins un groupe fonctionnel pris parmi les groupes hydroxy, mercapto et amino primaires et secondaires, et
(B4) d'un composé avec au moins un atome d'hydrogène actif lequel composé est dissocié à la température de cuisson.

5. Pigments en pâtes selon la revendication 1, caractérisés en ce que l'isocyanate coiffé (B) est solubilisé par voie cationique et obtenu par transformation
(B1) d'un polyisocyanate polymère ou oligomère,
(B2) d'un alcool multifonctionnel,
(B3) d'un composé avec au moins un groupe amino tertiaire et au moins un groupe fonctionnel pris parmi les groupes hydroxy, mercapto et amino primaires et secondaires, et
(B4) d'un composé avec au moins un atome d'hydrogène actif lequel composé est dissocié à la température de cuisson,
les quantités de (B1), (B2), (B31) et (B4) étant choisies de façon telle que l'on obtienne un indice d'amine du produit (B) de 5 à 40 mg KOH/g de résine solide.

6. Pigments en pâtes selon la revendication 1, caractérisés en ce que l'isocyanate coiffé (B) est solubilisé par voie anionique et obtenu par transformation
(B1) d'un polyisocyanate,
(B2) d'un alcool multifonctionnel,
(B3) d'un composé contenant au moins un groupe fonctionnel pris parmi les groupes hydroxy, mercapto et amino primaires et secondaires, et au moins un groupe acide, et
(B4) d'un composé avec au moins un atome d'hydrogène actif lequel composé est dissocié à la température de cuisson.

7. Pigments en pâtes selon la revendication 1, caractérisés en ce que l'isocyanate coiffé (B) est solubilisé par voie non ionique et obtenu par transformation
(B1) d'un polyisocyanate,
(B2) d'un alcool multifonctionnel,
(B3) d'un composé contenant au moins un groupe fonctionnel pris parmi les groupes hydroxy, mercapto et amino primaires et secondaires, et au moins un élément de structure hydrophile pris dans le groupe des éthers de polyoxyalkylènes avec 2 à 3 atomes de carbone dans le reste alkylène et leurs mélanges, et
(B4) d'un composé avec au moins un atome d'hydrogène actif lequel est dissocia à la température de cuisson.

8. Pigments en pâtes selon la revendication 4, caractérisés en ce que pour préparer l'isocyanate coiffé (B) l'on fait réagir d'abord le polyisocyanate (B1) simultanément ou successivement sur un déficit molaire en composés (B2) et (B4) en substance ou en fusion, ensuite l'on ajoute le composé (B3) dans une quantité telle qu'aucun groupe isocyanato libre ne soit plus présent.

9. Pigments en pâtes selon la revendication 8, caractérisés en ce que l'on emploie en tant que composant (B3) un mélange d'au moins chacun des composés selon (B33) et (B31) ou (B33) et (B32).

10. Pigments en pâtes selon la revendication 5, caractérisés en ce que l'on protonise entièrement ou partiellement l'isocyanate coiffé (B) par ajout d'un acide organique ou inorganique, puis l'on disperse dans l'eau.

11. Pigments en pâtes selon la revendication 6, caractérisés en ce que l'on ionise entièrement ou partiellement l'isocyanate coiffé (B) par ajout d'une base organique ou inorganique, puis l'on disperse dans l'eau.

12. Pigments en pâtes selon la revendication 1, caractérisés en ce que pour la préparation du composant (B), on prend un polyisocyanate (B1) parmi les polyisocyanates aromatiques polymères et oligomères.

13. Pigments en pâtes selon la revendication 4, caractérisés en ce que pour la préparation du composant (B), on prend un isocyanate polymère ou oligomère (B1) dans le groupe comportant des diisocyanates polymères et oligomères de diphénylméthane, de 2,2-diphénylpropane et de 1,1-diphényléthane, ainsi que des isocyanates dimères et trimères, des biurets, des allophanates et des cyanurates.

14. Pigments en pâtes selon la revendication 4, caractérisés en ce que l'alcool multifonctionnel (B2) est pris dans le groupe des polyoxyalkylène diols, des alcools aliphatiques et cycloaliphatiques avec 3 à 8 atomes de carbone et au moins deux groupes hydroxy, ainsi que leur produits de réaction sur l'oxyde d'éthylène et l'oxyde de propylène et leurs mélanges.

15. Pigments en pâtes selon la revendication 5, caractérisés en ce que le composé (B31) est une polyamine aliphatique comportant un groupe amino tertiaire et au moins un groupe amino secondaire ou primaire et 2 à 10 atomes de carbone.

16. Pigments en pâtes selon la revendication 6, caractérisés en ce que le composé (B32) est pris dans le groupe des acides carboxyliques et des acides organiques sulfoniques, sulfiniques, phosphoniques et phosphiniques, chacun comportant un ou plusieurs groupes réactifs sur l'isocyanate pris parmi les groupes hydroxy, amino et mercapto.

17. Pigments en pâtes selon la revendication 7, caractérisés en ce que le composé (B33) est un polyoxyalkylène diol ou une polyoxyalkylène amine.

18. Pigments en pâtes selon la revendication 4, caractérisés en ce que le composé (B4) est un agent de coiffage pris dans le groupe des alcools aliphatiques et cycloaliphatiques, des monoéthers de mono- et d'oligoalkylène glycols, des lactames, des imides et des cétoximes.

19. Pigments en pâtes selon la revendication 1, caractérisés en ce que l'on peut les préparer par mélange des dispersions de la résine (A') et du durcisseur (B') directement avant l'emploi.

20. Pigments en pâtes selon la revendication 1, caractérisés en ce que peut les préparer par mélange des composants résine (A) et durcisseur (B) en solution ou en fusion, éventuellement par élimination du solvant, par ajout d'un agent d'ionisation et par la mise en dispersion conjointe du mélange des deux composants dans l'eau.

21. Utilisation d'un pigment en pâte selon la revendication 1 pour la préparation d'agents de revêtement pour le revêtement d'objets selon le procédé de vernissage par cuisson.

22. Utilisation d'un pigment en pâte selon la revendication 1 dans le revêtement d'objets conducteurs d'électricité selon le procédé au trempé par électrophorèse.
